# EUROPEAN PATENT SPECIFICATION

(11) **EP 2 235 981 B1**
(45) Date of publication and mention of the grant of the patent: **20.02.2019**
(21) Application number: 08865893.5
(22) Date of filing: 22.12.2008
(51) Int. Cl.: H04L 29/08, H04W 28/06, H04W 4/18

(54) **A METHOD AND SYSTEM FOR THE DELIVERY OF LARGE CONTENT ASSETS TO A MOBILE DEVICE OVER A MOBILE NETWORK**
VERFAHREN UND SYSTEM FÜR DIE BEREITSTELLUNG UMFANGREICHER INHALTE AN EIN MOBILGERÄT ÜBER EIN MOBILFUNKNETZ
SYSTÈME ET PROCÉDÉ DE DISTRIBUTION DE GRANDS ÉLÉMENTS DE CONTENU À UN DISPOSITIF MOBILE SUR UN RÉSEAU MOBILE

(30) Priority: 20.12.2007 US 8819 P; 15.02.2008 US 66105 P
(43) Date of publication of application: 06.10.2010
(73) Proprietor: BlackBerry Limited, Waterloo, Ontario N2K 0A7 (US)
(72) Inventor: LEBLANC, Michael, Fredericton New Brunswick E3A 5S7 (CA); GLIDDEN, Jody, D., Sterling VA 20165 (US)
(74) Representative: MERH-IP Matias Erny Reichl Hoffmann Patentanwälte PartG mbB
(86) International application number: PCT/CA2008/002274
(87) International publication number: WO 2009/079794

(56) References cited:
- EP-A1- 1 852 786
- EP-A2- 1 691 505
- WO-A1-03/045030
- WO-A1-2004/088501
- WO-A1-2006/058544
- US-A- 5 996 015
- US-A1- 2005 054 287

## Description

### Technical Field

The application relates to the field of delivery of files to a mobile handheld device, such as delivery of files containing content such as graphics, audio and video to mobile devices.

### Background

There are currently size restrictions imposed by carriers and/or mobile handheld device infrastructures that limit the transfer of large files to mobile handheld devices. Smartphones that utilize particular technology are therefore forced to adhere to this limitation. Content that exceeds the maximum allowable file size are considered undeliv- erable. For some systems this limit is set at 1MB.
Within some mobile handheld device infrastructures, administrators are permitted to set the maximum allowable size of a file transfer to the mobile handheld device. While such systems no longer had a maximum size limit, the reliability of carrier networks for large files is a problem. Failures were repeatedly seen when delivering files over a certain size due to carrier coverage issues and latencies inherent in the mobile handheld device infrastructure. This results in an imposed limited size on file delivery.
In both of the above cases, timeouts occur while attempting to deliver content packages. The user can tether their device through a USB connection which may reduce the frequency of timeouts, however the size limit is still imposed. Previous methods of delivering large content assets or files to a Smartphone over a mobile network depended on a file chunk size being established before any content was published to any mobile device. If for some reason this file chunk size needed to be lowered (because, for example, the file transfer limits for the mobile handheld device infrastructure for receiving data was reduced thereby exceeding the established chunk size), then all content needed to be re-published.

Document WO 2006/058544 A1 discloses a technique for delivering a multimedia data file, such as an MNS, from an originator having an originator server associated therewith to a recipient having a recipient server associated therewith. The technique comprises establishing a communication path from the originator to the recipient via the originator server and recipient server. The recipient server receives the data file or portions thereof uploaded to the originator server from the originator. Thereafter, the recipient server individually forwards the data file portions received from the originator server without waiting for receipt of the complete data file.

Document EP 1691505 A2 discloses a method and system for transmitting a large multimedia message. The method for transmitting a multimedia message includes dividing the large multimedia date to be transmitted into a plurality of divided multimedia data according to a transmission capacity of the mobile station, and forming plurality divided multimedia messages corresponding to the plurality of divided multimedia data. The multimedia messages include division corresponding to each divided multimedia data. The dividing multimedia messages are then ultimately transmitted to a receiver that combines the plurality of divided multimedia data to recover the large multimedia data.

Document US 2005/0054287 A1 discloses an apparatus and method for dividing an MMS message in a mobile terminal capable of dividing an MMS message exciding transmission capacity of a server to a size that can be transferred. By implementing a multi-thread of a shooting thread and a dividing thread, an image signal and a voice signal inputted when shooting video are encoded, divided, stored and then transmitted so that a multimedia data as large as available for a mobile terminal can be transmitted as an MMS regardless of transmission capacity of an MMS server.

In this regard, also document EP 1852786 A1 should be mentioned as disclosing a pushing server performing fragmentation of content to be pushed, sending partial content and storing locally remaining fragments to be pulled by terminals at a later time.

The foregoing examples of the related art and limitations related thereto are intended to be illustrative and not exclusive. Other limitations of the related art will become apparent to those of skill in the art upon a reading of the specification and a study of the drawings.

### Brief Description of Drawings

Exemplary embodiments are illustrated in referenced figures of the drawings. It is intended that the embodiments and figures disclosed herein are to be considered illustrative rather than restrictive.
Figure 1 is a schematic drawing illustrating the method and system of the application for splitting of a large asset file.
Figure 2 is a schematic drawing illustrating the method and system of the application for delivery of large asset files.
Figure 3 is a flowchart illustrating a first embodiment of the method and system of the application for delivery of large asset files.
Figure 4 is a flowchart illustrating a second embodiment of the method and system of the application for delivery of large asset files.

### Description

Throughout the following description specific details are set forth in order to provide a more thorough understanding to persons skilled in the art. However, well known elements may not have been shown or described in detail to avoid unnecessarily obscuring the disclosure. Accordingly, the description and drawings are to be regarded in an illustrative, sense.
The present invention provides a method for delivering a large file to one or more mobile devices over a computer network according to claim 1. Further, the present invention provides a computer readable storage medium according to claim 6. The present invention also provides a system for delivering a large file to one or more mobile devices according to claim 7.

In referring herein to a "mobile device", such mobile device is a two-way communication device with advanced data communication capabilities including the capability to communicate with other mobile devices or computer systems through a network of transceiver stations. The mobile device may also have the capability to allow voice communication. Depending on the functionality provided by the mobile device, it may be referred to as a data messaging device, a two-way pager, a cellular telephone with data messaging capabilities, a wireless Internet appliance, or a data communication device (with or without telephony capabilities).

This application works in conjunction with the application described in pending international patent application no. PCT/CA2008/000851 published November 13, 2008 entitled, "Method and System for Pushing Content to Mobile Devices". Creating Content and Delivering to Users

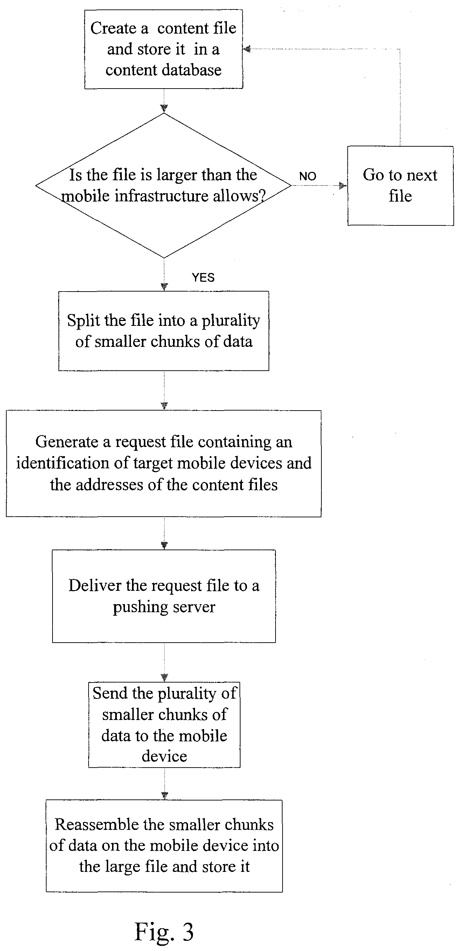

A first embodiment of the application is shown in Fig. 3. The author uses the **Content Authoring and Publishing System - 100** to create, publish and centrally store new content formatted for mobile devices. Content can be described as one or more media types that when combined create a document or a content package. This package can have text, images, video and audio. When content requires the addition of a large asset file, such as a video, the user simply adds the file from the **Digital Asset Library - 110.**

Content created to be centrally stored in the central content storage can originate from any authoring platform that allows the insertion of media assets such as video or audio. Alternatively in another embodiment any large file could be added to the content package to be stored centrally. It is the central storage in the digital asset library that triggers the operations required to prepare the large file for delivery.

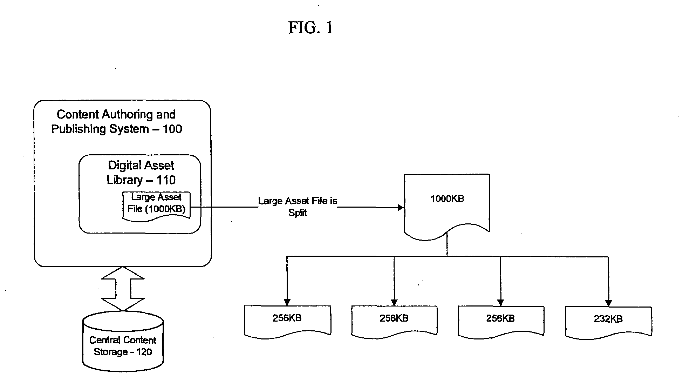

When a user adds a file to the Digital Asset Library, the system compares the size of the file with the chunk size configuration setting. If the file size exceeds the chunk size configuration setting, the file is split into smaller chunks. The splitting of the file into smaller chunks or files can result in any number of files as long as any single file does not exceed the established maximum chunk size. The creation of these files can happen in any sequence. For example in the current embodiment, if the maximum chunk size is set at 256KB and a 1000KB file is saved, the system will create four files, as shown in Fig. 1. The first three files are 256KB and the final one will contain the remaining 232KB. This is all done internally by the application. To the user creating content, this will appear as one file.

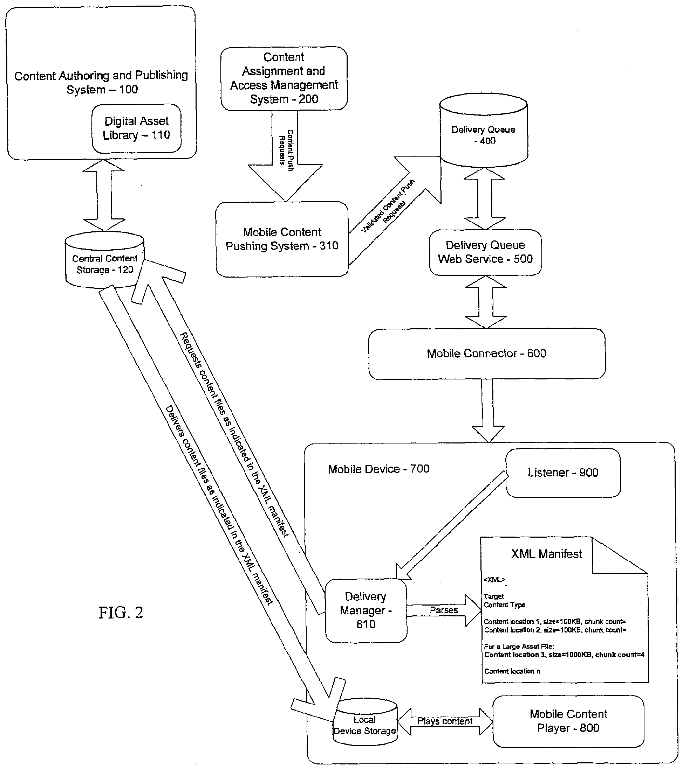

When the content has been created it can be assigned to users for consumption using the **Content Assignment and Access Management** - **200** functionality. This component makes a request to the **Mobile Content Pushing System - 310** to send the content to the user's mobile device. This request is an XML document that contains all of the details of the content being pushed, including any assets, and target user information so the push can be directed to individual users. Large asset files are listed as a single file with an associated chunk count in this XML manifest. See Fig. 2

Alternatively embodiments could have the manifest implemented in other markup languages other than XML or in some other electronic file formats. The XML manifest is sent to the **Delivery Queue** - **400** where the **Delivery Queue Web Service** - **500** picks up the request. The **Delivery Queue Web Service** - **500** component listens for requests made by the **Mobile Connector** - **600.** These are requests to determine if there are items on the queue that the Mobile Connector is able to extract. If an item is found on the queue the Mobile Connector retrieves the queued item.

### Delivering Content to the Mobile Device

When the **Mobile Connector** - **600** retrieves an XML file from the Web service, it passes it to the **Mobile Device** - **700.** The **Listener** - **900** on the Mobile Device - 700 passes the XML file (manifest) to the Delivery Manager - 810. The Delivery Manager - 810 extracts each content URL from the XML manifest and retrieves that piece of content from the **Central Content Storage - 120** on the Mobile chalkboard Server. This content is delivered through the mobile handheld device infrastructure for sending and receiving data which then pushes it to the user's device.

When a large asset file is part of the content package, it appears in the XML manifest as a single file with an associated chunk count. These chunks are received sequentially using HTTP Get Requests ("Pull") and reassembled on the **Mobile Content Player** - **800.** Each of the chunks that comprise a large asset file is appended to the others as they are delivered to the mobile handheld device. Alternatively the chunks can be received in any order as long as they are assembled in the proper order on the mobile handheld device

### Handling Failures

For large asset files, if the delivery of any chunk fails, a retry process is initiated by the **Delivery Manager** - **810** built into the Mobile Content Player. Upon delivery failure, the delivery process stops and waits for a preset amount of time to elapse. This duration time is configurable.

When the retry time has elapsed, the Delivery Manager initiates the pull mechanism again. The delivery process continues beginning with the failed asset chunk. The delivery of large asset files can be cancelled. If delivery fails again, the Delivery Manager again waits for the amount of time specified as the retry duration time. This retry process continues until either the content is delivered or the preset, configurable number of retries is reached and is considered a failure to deliver. If an asset could not be delivered, the Delivery Manager cleans up any chunks of that asset that were pulled to Mobile Content Player to minimize memory usage. All attempts to deliver content for large asset files are logged regardless of whether or not the delivery was a success or failure. Once the XML manifest has been received by the Mobile Device, the delivery of content is tracked. This status information is communicated back to the Mobile Content Delivery System from the Delivery Manager. The status of the content's consumption by the user is also tracked and reported (e.g. Content Received, Content Viewed, Content Completed).

There are no latency issues with running the content because it is all stored locally on the mobile device. A user can view the content while going in and out of network coverage areas because the content is local to the device.

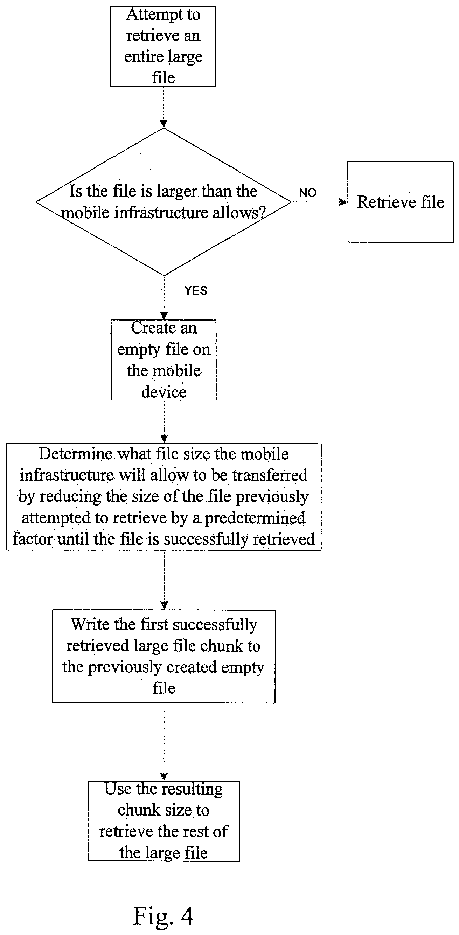

A second embodiment of the Method and System for the Delivery of Large Content Assets to a Smartphone over a Mobile Network is shown in Fig. 4.

### Creating Content and Delivering to Users

As described above, an author first uses the **Content Authoring and Publishing System -100** to create, publish and centrally store new content formatted for mobile devices. When the content has been created it can be assigned to users for consumption using the **Content Assignment and Access Management - 200** functionality. This component makes a request to the **Mobile Content Pushing System - 310** to send the content to the user's mobile device. This request is an XML document that contains all of the details of the content being delivered, including any assets, and target user information so the delivery can be directed to individual users. The XML manifest is sent to the **Delivery Queue - 400** where the **Delivery Queue Web Service - 500** picks up the request. The Delivery Queue Web Service - 500 component listens for requests made by the **Mobile Connector - 600.** These are requests to determine if there are items on the queue that the Mobile Connector - 600 is able to extract. If an item is found on the queue the Mobile Connector - 600 retrieves the queued item.

### Delivering Content to the Mobile Device

When the **Mobile Connector - 600** retrieves an XML file from the Web service - 500, it passes it to the **Mobile Device - 700.** The **Listener - 900** on the Mobile Device - 700 passes the XML file (manifest) to the Delivery Manager - 810. The Delivery Manager - 810 extracts each content URL from the XML manifest and retrieves that piece of content from the **Central Content Storage - 120** on the Mobile chalkboard Server. When a large asset file is part of the content package, the **Delivery Manager - 810** first attempts to download the entire asset file. If it is larger than the mobile infrastructure allows then an error will occur and Delivery Manager - 810 will determine that it needs to bring down the file in smaller chunks. At this point the Delivery Manager - 810 creates an empty file on the mobile device 700 to store the large asset.

Logic built into the Delivery Manager - 810 allows it to determine what asset size the mobile infrastructure will allow to be transferred. It does this by reducing the previously failed attempt to retrieve a large asset by some factor (in a preferred version this is ½) until it is successful. The resulting size (called chunk size) is then used to retrieve the rest of the large asset. The Delivery Manager - 810 writes the first successfully retrieved large asset chunk to the previously created empty file. It then requests the next chunk of the large asset by using the initial chunk size as an offset to the large asset file stored in the Central Content Storage - 120. This is accomplished via an HTTP request to the large asset file with an offset as well as a file size specified. In this case the file size is always the chunk size and the offset keeps growing.

These chunks of data are received sequentially using HTTP Get Requests ("Pull") and are appended to the newly created file on the Mobile Device - 700 until all bytes are received. At this point, the file is closed and the Delivery Manager - 810 continues to extracts the remaining content listed in the XML manifest. When all of the content in a content package has been delivered to the **Local Device Storage** - **820** on the Mobile Device - 700, it is available to be rendered to the user by the **Mobile Content Player** - **800.**

Other implementations may utilize other protocols such as HTTPS or lower Level protocols such as TCP/IP to retrieve the file segments from the central storage. These protocols would need to support the retrieval of a specific file segment based on a starting position and a length. HTTP provides this capability as part of its standard implementation. It is possible that another protocol could be created / altered to accommodate this file segment retrieval requirement as well. Also the file segments can be retrieved out of sequence as long as they are all retrieved. This would be useful in a multi threaded mobile player where each thread is spawned to retrieve its own file segment.

### Handling Failures

For large asset files, if the delivery of any chunk of data fails, a retry process is initiated by the **Delivery Manager** - **810** built into the Mobile Content Player - 800. Upon delivery failure, the delivery process stops and waits for a preset amount of time to elapse. This duration time is configurable. When the retry time has elapsed, the Delivery Manager - 810 initiates the pull mechanism again. The delivery process continues beginning with the failed asset data chunk. The delivery of large asset files can be cancelled. If delivery fails again. the Delivery Manager - 810 again waits for the amount of time specified as the retry duration time. This retry process continues until either the content is delivered or the preset, configurable number of retries is reached and is considered a failure to deliver. If an asset could not be delivered, the Delivery Manager - 810 cleans up any chunks of data of that asset that were pulled to Mobile Content Player - 800 to minimize memory usage. All attempts to deliver content for large asset files are logged regardless of whether or not the delivery was a success or failure.

### Applications of the technology

This technology can be used to deliver any large asset files to a mobile device. These files can be media files, such as audio, video, animations or images. Practical applications of this application include:
- Training systems where courses are pushed to mobile users and groups
- News readers through an RSS fee
- Mapping applications and satellite imagery
- Sending video and audio files
- Sending applications and data files to the mobile device
- Podcast subscriptions.

While a number of exemplary aspects and embodiments have been discussed above, those of skill in the art will recognize certain modifications, permutations, additions and sub-combinations thereof.

## Claims

1. A method of delivering a large file to one or more mobile devices (700) over a computer network, the method comprising:
storing one or a plurality of content files in a content database accessible to said computer network, and when a content file exceeds a maximum file size configuration setting , splitting said content file into a plurality of smaller chunks of data;
receiving a request file, at a pushing server (310), the request file being a manifest file and containing an identification of the one or more mobile devices (700) and addresses of one or a plurality of content files stored in the content database (120), and delivering, upon receiving the request file, said manifest file to the one or more mobile devices identified in said request file;
in response to receiving, by a central content storage comprising the content database (120), request containing addresses contained in the request file, sending the one or a plurality of content files corresponding to the addresses and, in the case of large content files, sending said plurality of smaller chunks of data to the one or more mobile devices (700) for reassembling said plurality of smaller chunks of data at each of the one or more mobile devices (700),
wherein the request is received from the one or more mobile devices (700) and the plurality of smaller chunks of data is sent from the content database (120) to the one or more mobile devices (700).

2. The method of claim 1 wherein said request file is an XML file.

3. The method of any one of claims 1-2 wherein at least one of said one or more content files is selected from the group consisting of audio, video, animations and images.

4. The method of any one of claims 1-3 wherein, when sending of any one of the plurality of smaller chunks of data fails, a retry process is initiated.

5. The method of claim 4 wherein:
a) when sending of any one of the plurality of smaller chunks of data fails the sending is stopped until a preset amount of retry time has elapsed;
b) when the retry time has elapsed, initiating the sending again; and
c) repeating a) and b) until either all of the plurality of smaller chunks of data is delivered or a predetermined number of retries is reached.

6. A computer readable storage medium having program code stored thereon, wherein the program code, when executed by a computer system, causes the computer system to perform the method of any one of claims 1-5.

7. A system for delivering a large file to one or more mobile devices, the system comprising computer-implemented means for carrying out the method of any one of claims 1-5.

## Patentansprüche

1. Verfahren zur Lieferung einer großen Datei an eine oder mehrere mobile Vorrichtungen (700) über ein Computernetzwerk, das Verfahren umfassend:
Speicherung von einer oder mehreren Inhaltsdateien in einer Inhaltsdatenbank, auf die das Computernetzwerk zugreifen kann, und wenn eine Inhaltsdatei eine maximale Dateigröße, die in eine Konfiguration eingestellt ist, überschreitet, Aufteilung der Inhaltsdatei in mehrere kleinere Datenchunks;
Empfang einer Anfragedatei an einem Push-Server (310), wobei die Anfragedatei eine Manifestdatei ist und eine Identifizierung der einen oder mehreren mobilen Vorrichtungen (700) und Adressen einer oder mehrerer Inhaltsdateien enthält, die in der Inhaltsdatenbank (120) gespeichert sind, und Lieferung der Manifestdatei nach Empfang der Anfragedatei an die eine oder mehreren mobilen Vorrichtungen, die in der Anfragedatei identifiziert sind;
in Reaktion auf den Empfang einer Anfrage, die Adressen enthält, die in der Anfragedatei enthalten sind, durch einen zentralen Inhaltsspeicher, der die Inhaltsdatenbank (120) umfasst, Versand der einen oder mehreren Inhaltsdateien, die den Adressen entsprechen, und bei großen Inhaltsdateien Versand der mehreren kleineren Datenchunks an die eine oder mehreren mobilen Vorrichtungen (700) zum Reassemblieren der mehreren kleineren Datenchunks an jeder der einen oder mehreren mobilen Vorrichtungen (700), wobei die Anfrage von der einen oder den mehreren mobilen Vorrichtungen (700) empfangen wird und die mehreren kleineren Datenchunks von der Inhaltsdatenbank (120) an die einen oder mehreren mobilen Vorrichtungen (700) versendet werden.

2. Verfahren nach Anspruch 1, wobei die Anfragedatei eine XML-Datei ist.

3. Verfahren nach einem der Ansprüche 1 bis 2, wobei mindestens eine der einen oder mehreren Inhaltsdateien aus der Gruppe bestehend aus Audio, Video, Animationen und Bildern gewählt ist.

4. Verfahren nach einem der Ansprüche 1 bis 3, wobei, bei Fehlschlagen des Versands eines der mehreren kleineren Datenchunks, ein Ablauf zum erneuten Versuchen eingeleitet wird.

5. Verfahren nach Anspruch 4, wobei:
a) bei Fehlschlagen des Versands eines der mehreren kleineren Datenchunks der Versand gestoppt wird, bis eine vorbestimmte Dauer einer Zeit für den erneuten Versuch abgelaufen ist;
b) wenn die Zeit für den erneuten Versuch abgelaufen ist, erneutes Einleiten des Verssendens; und
c) Wiederholung von a) und b), bis entweder alle der mehreren kleineren Datenchunks zugestellt wurden oder eine vorbestimmte Anzahl von erneuten Versuchen erreicht ist.

6. Computer lesbares Speichermedium, das einen darauf gespeicherten Programmcode aufweist, wobei der Programmcode, wenn er durch ein Computersystem ausgeführt wird, das Computersystem dazu bringt, das Verfahren eines der Ansprüche 1 bis 5 auszuführen.

7. System zur Lieferung einer großen Datei an eine oder mehrere mobile Vorrichtungen, das System umfassend: computerimplementiertes Mittel zum Ausführen des Verfahrens aus einem der Ansprüche 1 bis 5.

## Revendications

1. Procédé de distribution d'un fichier volumineux à un ou plusieurs dispositifs mobiles (700) par l'intermédiaire d'un réseau informatique, le procédé comprenant :
la mise en mémoire d'un ou d'une pluralité de fichiers de contenu dans une base de données de contenu accessible audit réseau informatique, et lorsqu'un fichier de contenu dépasse un paramétrage de configuration de taille maximale de fichier, la division dudit contenu en une pluralité de fragments de données plus petits ;
la réception d'un fichier de demande, au niveau d'un serveur de pousser (310), du fichier de demande qui est un fichier manifeste et contenant une identification du ou des dispositifs mobiles (700) et les adresses d'un ou d'une pluralité de fichiers de contenu mis en mémoire dans la base de données de contenu (120), et la distribution, à réception du fichier de demande, dudit fichier manifeste au ou aux dispositifs mobiles identifiés dans ledit fichier de demande ;
en réponse à la réception, par une mémoire centrale de contenu comprenant la base de données de contenu (120), d'une demande contenant les adresses contenues dans le fichier de demande, l'envoi du ou d'une pluralité de fichiers de contenu de manière correspondante aux adresses et, dans le cas de fichiers de contenu volumineux, l'envoi de ladite pluralité de fragments plus petits de données au ou aux dispositifs mobiles (700) pour réassembler ladite pluralité de fragments plus petits de données au niveau de chacun du ou des dispositifs mobiles (700),
dans lequel la demande est reçue du ou des dispositifs mobiles (700) et la pluralité de fragments plus petits de données sont envoyés de la base de données de contenu (120) au ou aux dispositifs mobiles (700).

2. Procédé selon la revendication 1, dans lequel ledit fichier de demande est un fichier XML.

3. Procédé selon l'une quelconque des revendications 1 et 2, dans lequel au moins un desdits un ou plusieurs fichiers de contenu est sélectionné dans le groupe constitué par l'audio, la vidéo, les animations et les images.

4. Procédé selon l'une quelconque des revendications 1 à 3, dans lequel, lorsque l'envoi de l'un quelconque de la pluralité de fragments plus petits de données échoue, un processus de relance est initié.

5. Procédé selon la revendication 4, dans lequel :
a) lorsque l'envoi de l'un quelconque de la pluralité de fragments de données plus petits échoue, l'envoi est stoppé jusqu'à ce qu'un laps de temps prédéfini se soit écoulé ;
b) lorsque le temps de relance s'est écoulé, l'envoi est à nouveau initié ; et
c) les étapes a) et b) sont répétées jusqu'à ce que, soit l'intégralité de la pluralité de fragments plus petits de données soit distribuée, soit un nombre prédéterminé de relances soit atteint.

6. Support de stockage lisible par ordinateur sur lequel un code de programme est mis en mémoire, dans lequel le code de programme, lorsqu'il est exécuté par un système informatique, amène le système informatique à mettre en oeuvre le procédé selon l'une quelconque des revendications 1 à 5.

7. Système de distribution d'un fichier volumineux à un ou plusieurs dispositifs mobiles, le système comprenant des moyens mis en oeuvre par ordinateur pour réaliser le procédé selon l'une quelconque des revendications 1 à 5.
